# EUROPÄISCHE PATENTSCHRIFT

(11) **EP 4 150 228 B1**
(45) Veröffentlichungstag und Bekanntmachung des Hinweises auf die Patenterteilung: **01.01.2025**
(21) Anmeldenummer: 21723691.8
(22) Anmeldetag: 30.04.2021
(51) Int. Cl.: F16D 23/12, F16D 23/14

(54) **MONTAGEFIXIERUNG FÜR EINEN BETÄTIGUNGSMECHANISMUS**
INSTALLATION FIXING MEANS FOR AN ACTUATING MECHANISM
FIXATION DE MONTAGE POUR MÉCANISME D'ACTIONNEMENT

(30) Priorität: 15.05.2020 DE 102020113196
(43) Veröffentlichungstag der Anmeldung: 22.03.2023
(73) Patentinhaber: KNORR-BREMSE Systeme für Nutzfahrzeuge GmbH, 80809 München (DE)
(72) Erfinder: UPADHYAYA, Vishwas, 80933 München (DE); LECOCQ, Emmanuel, 81476 München (DE)
(86) Internationale Anmeldenummer: PCT/EP2021/061376
(87) Internationale Veröffentlichungsnummer: WO 2021/228579

(56) Entgegenhaltungen:
- EP-A1- 1 388 682
- EP-A1- 1 388 682
- WO-A1-2020/043410
- WO-A1-2020/043410
- DE-A1- 102009 024 779
- DE-A1- 102009 024 779
- DE-A1- 102018 210 628
- DE-A1- 102018 210 628

## Beschreibung

Die vorliegende Erfindung betrifft einen Betätigungsmechanismus mit einem Rückhaltemechanismus sowie einen Aktuator, insbesondere ausgebildet als Kupplungssteller, mit einem solchen Betätigungsmechanismus sowie ein Fahrzeug.

Für einen Betätigungsmechanismus mit einem Übertragungselement, das parallel zu einer Betätigungsrichtung verschiebbar ausgebildet ist, und der einen Kompensationsmechanismus aufweist, der dazu ausgebildet ist, eine Nachstellbewegung des Übertragungselementes zuzulassen oder zu blockieren, muss üblicherweise zur Montage in einem Gehäuse eine entsprechend große Öffnung in dem Gehäuse vorgesehen sein.

Solche Betätigungsmechanismen finden sich üblicherweise in Kupplungsstellern, die dazu ausgebildet sind, mittels Verschiebung des Übertragungselementes durch die Betätigungskraft in Betätigungsrichtung eine Kupplung auszurücken. Eine Nachstellung des Übertragungselementes, die durch den zunehmenden Verschleiß der Kupplung nötig wird, wird dabei durch den Kompensationsmechanismus realisiert, der diese Nachstellung in Form der Verschiebung des Übertragungselements relativ zu dem Kompensationsmechanismus parallel zu der Betätigungsrichtung zulässt, solange keine Betätigungskraft auf den Betätigungsmechanismus aufgebracht wird. Üblicherweise erfolgt die Nachstellbewegung durch Zusammenwirken mit einer Feder, die mit der Kupplungsfeder ins Gleichgewicht gebracht wird.

Jedoch kann auch bei Betätigungsmechanismen ohne Kompensationsmechanismus gewünscht sein, dass für die Montage möglichst kleine Öffnungen im Gehäuse vorgesehen werden können.

Aus der EP 1 388 682 A1 ist ein Kupplungssteller bekannt, der ein Übertragungselement aufweist, das dazu ausgebildet ist, durch eine Betätigungskraft, die auf den Betätigungsmechanismus aufgebracht wird, parallel zu einer

Betätigungsrichtung verschoben zu werden, und der weiter einen Rückhaltemechanismus aufweist, der dazu ausgebildet ist, eine Verschiebung des Übertragungselements parallel zu der Betätigungsrichtung zu blockieren.

Weitere Betätigungsmechanismen sind aus der DE 10 2018 210 628 A1, der WO 2020 / 043 410 A1 sowie aus der DE 10 2009 024 779 A1 bekannt.

Der vorliegenden Erfindung liegt daher die Aufgabe zugrunde, einen Betätigungsmechanismus zur Verfügung zu stellen, bei dem das Übertragungselement zur Montage aufwandsarm fixiert werden kann.

Diese Aufgabe wird durch die Gegenstände der unabhängigen Ansprüche gelöst. Vorteilhafte Weiterbildungen sind Gegenstand der Unteransprüche.

Erfindungsgemäß ist ein Betätigungsmechanismus vorgesehen, aufweisend:
- ein Übertragungselement, das dazu ausgebildet ist, durch eine Betätigungskraft, die auf den Betätigungsmechanismus aufgebracht wird, parallel zu einer Betätigungsrichtung verschoben zu werden; und
- einen Rückhaltemechanismus, der dazu ausgebildet ist, eine Verschiebung des Übertragungselements parallel zu der Betätigungsrichtung zu blockieren.

Unter einer Blockierung kann eine tatsächliche Blockierung verstanden werden und/oder eine Hemmung. Bei einer tatsächlichen Blockierung wird das Übertragungselement vollständig an einer Verschiebung parallel zu der Betätigungsrichtung, zumindest jedoch in oder entgegen der Betätigungsrichtung, gehindert. Dies kann beispielsweise durch einen Anschlag erfolgen. Es kann auch vorgesehen sein, dass sich das Übertragungselement noch in gewissen Grenzen parallel zu der Betätigungsrichtung bewegen kann, die beispielsweise durch ein Spiel zwischen zwei ineinander greifenden Elementen des Rückhaltemechanismus' gegeben sind. Bei einer Hemmung wirkt eine Gegenkraft entgegen der Bewegung des Übertragungselementes parallel zur Betätigungsrichtung, zumindest jedoch in oder entgegen der Betätigungsrichtung. Diese Gegenkraft kann durch Aufbringen einer ausreichend hohen Betätigungskraft überwunden werden, so dass das Übertragungselement verschoben werden kann. Dies kann beispielsweise durch ein Gummielement realisiert werden, das die Gegenkraft erzeugt und das bei ausreichend hoher Betätigungskraft verformt wird, so dass keine Hemmung bzw. Blockierung mehr vorliegt.

Die Betätigungsrichtung ist bevorzugt als Gerade ausgebildet. Es sind aber auch andere geometrische Ausbildungen der Betätigungsrichtung möglich. Beispielsweise kann die Betätigungsrichtung gekrümmt sein oder zumindest neben geraden auch gekrümmte Abschnitte aufweisen.

Das Übertragungselement ist bevorzugt als Stab ausgebildet, dessen Achse bevorzugt mit der Betätigungsrichtung zusammenfällt. Das Übertragungselement weist vorzugsweise einen runden, insbesondere kreisförmigen Querschnitt quer zur Achse auf.

Vorzugsweise weist der Betätigungsmechanismus einen Kompensationsmechanismus auf, der dazu ausgebildet ist, eine Verbindung zur Übertragung der Betätigungskraft auf das Übertragungselement, insbesondere von dem Kompensationsmechanismus auf das Übertragungselement, herzustellen, wenn eine Betätigungskraft auf den Betätigungsmechanismus, insbesondere auf den Kompensationsmechanismus, aufgebracht wird, und der dazu ausgebildet ist, die Verbindung zu lösen, wenn keine Betätigungskraft auf den Betätigungsmechanismus, insbesondere auf den Kompensationsmechanismus, aufgebracht wird. Eine derartige Verbindung kann beispielsweise zwischen dem Übertragungselement und dem Kompensationsmechanismus mittels Klemmung und/oder Reibungserhöhung durch Erhöhung einer Anpresskraft hergestellt werden.

Vorzugsweise ist das Übertragungselement bei gelöster Verbindung relativbeweglich zu dem Kompensationsmechanismus, insbesondere parallel zu der Betätigungsrichtung, vorgesehen. Auf diese Weise kann das Übertragungselement eine Nachstellbewegung ausführen, wenn es nicht definiert durch das Aufbringen einer Betätigungskraft verschoben werden soll.

Vorzugsweise ist der Rückhaltemechanismus dazu ausgebildet, die Verschiebung des Übertragungselementes parallel zu der Betätigungsrichtung, unabhängig von dem Kompensationsmechanismus zu blockieren. D.h. auch bei gelöster Verbindung zwischen dem Übertragungselement und dem Kompensationsmechanismus wirkt der Rückhaltemechanismus auf das Übertragungselement, so dass insbesondere dessen Nachstellbewegung blockiert wird.

Der Rückhaltemechanismus ist dazu ausgebildet, das Übertragungselement an einer Position entlang der Betätigungsrichtung zu blockieren, die außerhalb eines Arbeitshubes des Übertragungselementes liegt. Während des

Betriebs des Betätigungsmechanismus' wird das Übertragungselement zwischen zwei Positionen entlang der Betätigungsrichtung, eben dem Arbeitshub, bewegt. Diese Positionen ändern sich im Laufe der Betriebszeit des Betätigungsmechanismus' aufgrund von Nachstellbewegungen des Kompensationsmechanismus', wenn ein Kompensationsmechanismus vorgesehen ist. Ist kein Kompensationsmechanismus vorgesehen, so ändern sich diese Positionen nicht. Bei der Auslegung eines solchen Betätigungsmechanismus' kann der Fachmann den Arbeitshub bestimmen und so den Rückhaltemechanismus entsprechend auslegen, dass eine Blockierung des Übertragungselementes in jedem Fall außerhalb des Arbeitshubes stattfindet. Insbesondere ist die Position, in der das Übertragungselement durch den Rückhaltemechanismus blockiert wird, entgegen der Betätigungsrichtung hinter dem Arbeitshub angeordnet. Dies hat zur Folge, dass sich das Übertragungselement, wenn es durch den Rückhaltemechanismus blockiert wird, in einer Position entlang der Betätigungsrichtung befindet, bei der der Betätigungsmechanismus sich in Betätigungsrichtung weniger weit erstreckt als während des Betriebs. Das Übertragungselement ist somit maximal, insbesondere weiter als im späteren Betrieb, eingerückt. Somit wird erreicht, dass der Betätigungsmechanismus für den Fall der Montage oder Demontage relativ kurz bauend ausgeführt werden kann, so dass eine Montageöffnung durch die der Betätigungsmechanismus eingebaut wird, kleiner gestaltet werden kann.

Vorzugsweise ist der Rückhaltemechanismus dazu ausgebildet, das Übertragungselement form- und/oder reibschlüssig zu blockieren. Dabei muss der Rückhaltemechanismus so ausgelegt sein, um möglichen Rückstellkräften, die beispielsweise durch eine elastische Vorspannung erzeugt werden, und die auf das Übertragungselement wirken, entgegenzuwirken.

Vorzugsweise ist der Rückhaltemechanismus dazu ausgebildet, die Blockierung des Übertragungselementes durch Aufbringen einer Betätigungskraft auf das Übertragungselement, deren Betrag einen vorbestimmten Wert bzw. Mindestwert übersteigt, und/oder durch Verschieben des Übertragungselements parallel zur Betätigungsrichtung, insbesondere in Betätigungsrichtung, zu lösen. Der Rückhaltemechanismus bildet somit bevorzugt eine Kraftschwelle aus, die durch Aufbringen einer Betätigungskraft mit einem Mindestbetrag und/oder durch Verschieben des Betätigungselements parallel zur Betätigungsrichtung, insbesondere in Betätigungsrichtung, überwunden werden kann. Das Aufbringen der Betätigungskraft bzw. das Erzeugen der Verschiebung kann dabei auf demselben Weg erfolgen, wie dies im späteren Betrieb erfolgt. So kann beispielsweise, wenn der Betätigungsmechanismus zur fluidischen Betätigung ausgebildet ist, ein entsprechender Druck aufgebracht werden, der der Mindestbetätigungskraft entspricht und/oder die Mindestverschiebung des Übertragungselementes bewirkt.

Vorzugsweise weist der Rückhaltemechanismus ein Rückhalteelement und ein Gegenelement auf, die dazu ausgebildet sind, miteinander in Kontakt zu treten, wodurch die Blockierung des Übertragungselementes durch den Rückhaltemechanismus erreicht wird. Der Kontakt zwischen Rückhalteelement und Gegenelement kann insbesondere form- und/oder reibschlüssig ausgebildet sein.

Vorzugsweise ist der Rückhaltemechanismus dazu ausgebildet, dass zur Lösung der Blockierung der Kontakt zwischen dem Rückhalteelement und dem Gegenelement separat, vorzugsweise mittels einer Bewegung die nicht parallel zur Betätigungsrichtung orientiert ist und insbesondere als Drehbewegung ausgebildet ist, gelöst werden muss. Beispielsweise kann das Rückhalteelement als quer zur Betätigungsrichtung orientierter Stift ausgebildet sein, der in eine Aussparung eingreift, die durch ein Gegenelement begrenzt ist. Es kann auch eine Verschraubung in dem Kontakt zwischen Rückhalteelement und Gegenelement vorgesehen sein. Hier muss zunächst jeweils der Kontakt zwischen Rückhalteelement und Gegenelement durch eine separate Bewegung gelöst werden, bevor das Übertragungselement parallel zur Betätigungsrichtung durch eine Betätigungskraft bewegt werden kann. Dabei kann der Rückhaltemechanismus zusätzlich eine Kraftschwelle enthalten, die ebenfalls überwunden werden muss, um die Blockierung zu lösen.

Vorzugsweise weist der Rückhaltemechanismus ein Vorspannelement auf, das eine Vorspannkraft auf das Rückhalteelement und/oder auf das Gegenelement ausübt, um eine initiale Kontaktkraft zwischen dem Rückhalteelement und dem Gegenelement aufzubringen. Das Vorspannelement ist vorzugsweise als Federelement ausgebildet, das die Vorspannkraft auf das Rückhalteelement und/oder auf das Gegenelement aufbringt. Das Vorspannelement kann als Federelement ausgebildet sein und insbesondere Metall, wie Stahl, Elastomere, Gummi oder andere geeignete Materialien aufweisen. Das Vorspannelement kann bevorzugt einstückig mit dem Rückhalteelement und/oder mit dem Gegenelement ausgebildet sein, oder besonders bevorzugt mit dem Rückhalteelement und/oder mit dem Gegenelement identisch sein.

Vorzugsweise umfassen/umfasst das Rückhalteelement und/oder das Gegenelement ein Kontaktelement, das zum Kontakt mit dem Gegenelement und/oder dem Rückhalteelement ausgebildet ist, und das vorzugsweise dazu ausgebildet ist, keine oder nur eine gegenüber der Betätigungskraft geringe Gegenkraft auf das Übertragungselement auszuüben, wenn das Rückhalteelement und das Gegenelement nicht in Kontakt sind. Bevorzugt ist das Kontaktelement als Wälzkörper ausgebildet. Ein Wälzkörper kann beispielsweise auf der Oberfläche des Übertragungselementes aufliegen, wobei er auf das Übertragungselement eben keine oder nur eine geringe Kraft parallel zur Betätigungsrichtung ausübt, wenn das Übertragungselement parallel zur Betätigungsrichtung verschoben wird. Beispielsweise kann der Kontakt zwischen dem Rückhalteelement und dem Gegenelement als Kugelrastierung ausgebildet sein. Solange die Kugel nicht in eine korrespondierende Aussparung eingreift, ist die Kraft, die sie auf das Übertragungselement parallel zur Betätigungsrichtung ausübt, vergleichsweise gering. So kann das Kontaktelement auch im späteren Betrieb, wenn die Blockierung durch den Rückhaltemechanismus gelöst wurde, mit der Oberfläche des Übertragungselementes in Kontakt bleiben, wobei die dabei auf das Übertragungselement aufgebrachte Kraft vernachlässigbar gering ist.

Vorzugsweise sind/ist das Rückhalteelement und/oder das Gegenelement verschiebbar und/oder schwenkbar vorgesehen. Auf diese Weise kann der Kontakt zwischen dem Rückhalteelement und dem Gegenelement bei Überwinden der nötigen Kraftschwelle leicht gelöst werden.

Alternativ oder zusätzlich sind/ist das Rückhalteelement und/oder das Gegenelement dazu ausgebildet, insbesondere bei gegenseitigem Kontakt, sich, insbesondere elastisch, zu verformen. Das Rückhalteelement und/oder das Gegenelement können/kann beispielsweise geometrisch so gestaltet sein dass eine Verformung, die die Blockierung des Übertragungselementes aufhebt, dann ermöglicht wird, wenn die nötige Kraftschwelle überwunden ist Die Verformung erfolgt bevorzugt elastisch. Es kann jedoch auch vorgesehen sein, dass das Rückhalteelement und/oder das Gegenelement dauerhaft verformt und/oder zerstört werden.

Vorzugsweise ist das Rückhalteelement oder das Gegenelement auf dem Übertragungselement ausgebildet. Die Ausbildung ist bevorzugt einstückig mit dem Übertragungselement.

Vorzugsweise ist mehr als ein Rückhalteelement und/oder Gegenelement vorgesehen. Diese sind bevorzugt um die Betätigungsrichtung herum, besonders bevorzugt auf einem Kreis, insbesondere äquidistant, angeordnet.

Vorzugsweise umfasst der Rückhaltemechanismus, insbesondere der Kontakt zwischen Rückhalteelement und Gegenelement, eine Rastierung, vorzugsweise eine Kugelrastierung, einen Bajonettverschluss, einen Rückhaltestift, einen Formfederring, und/oder eine Verschraubung.

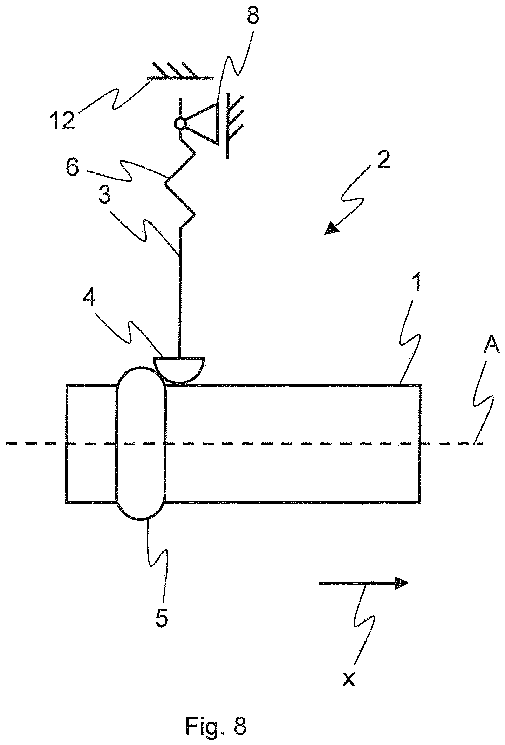

Vorzugsweise erfolgt die Blockierung durch den Rückhaltemechanismus erst dann, wenn das Übertragungselement bei gleichzeitigem Kontakt zwischen Rückhalteelement und Gegenelement eine Wegstrecke parallel zu der Betätigungsrichtung zurückgelegt hat. Der Rückhaltemechanismus ist daher bevorzugt dazu ausgebildet, die eine vorbestimmte Bewegung des Übertragungselementes zuzulassen. Dies kann beispielsweise dadurch erreicht werden, indem Spiel bzw. eine freie Wegstrecke im Rückhaltemechanismus vorgesehen wird. Dies muss zunächst überwunden werden, damit die Blockierung ausgebildet werden kann. Ein solches Beispiel ist in Fig. 8 gezeigt. Hier muss sich der Verbund aus Rückhalteelement 3 und Vorspannelement 6 zunächst, in Reaktion auf eine Verschiebung des Übertragungselementes 1 in Betätigungsrichtung x, nach oben bewegen, um die freie Wegstrecke zu dem Anschlag 12 zu überwinden. Erst dann kann sich eine Blockierung durch den Rückhaltemechanismus 2 aufbauen, obwohl das Gegenelement 5 von Anfang an mit dem Kontaktelement 4, das Teil des Rückhalteelementes 3 ist, in Kontakt stand.

Vorzugsweise ist der Betätigungsmechanismus dazu ausgebildet, dass die Betätigungskraft mechanisch, fluidisch, insbesondere hydraulisch und/oder pneumatisch, elektrisch, und/oder magnetisch auf den Betätigungsmechanismus aufgebracht werden kann. Die Betätigungskraft wird bevorzugt auf ein Betätigungselement aufgebracht, die über den Kompensationsmechanismus auf das Übertragungselement übertragen wird. Bei fluidischer Ausbildung ist bevorzugt ein Betätigungselement vorgesehen, das als Kolben in einem Zylinder geführt ist und darin mit Druck beaufschlagt werden kann. Bei mechanischer Ausbildung wird die Kraft mechanisch auf das Betätigungselement aufgebracht. Bei elektrischer bzw. magnetischer Ausbildung wird die Betätigungskraft durch Wechselwirkung mit elektrischen und/oder magnetischen Feldern erzeugt.

Erfindungsgemäß ist ein Aktuator mit einem Betätigungsmechanismus wie oben beschrieben vorgesehen, wobei das Übertragungselement dazu ausgebildet ist, eine Verschiebung, die aus einem Aufbringen einer Betätigungskraft auf den Betätigungsmechanismus resultiert, auf ein zu betätigendes Element zu übertragen.

Vorzugsweise ist das zu betätigende Element eine Fahrzeugkupplung. Der Aktuator ist somit als Kupplungssteller ausgebildet. Dieser kann insbesondere als zentraler Kupplungssteller ausgebildet sein, der mit der Achse der Kupplung bzw. der Ein- und Ausgangswelle der Kupplung koaxial angeordnet ist. Diese Bauweise erlaubt die Realisierung eines relativ kompakten Aktuators. Der Aktuator kann jedoch auch als dezentraler Kupplungssteller ausgebildet sein, wobei die Verschiebung des Übertragungselementes dann über eine Übersetzung, beispielsweise einen Hebel, auf die Kupplung wirkt. Der Vorteil dieser Bauweise liegt darin, dass die benötigten Betätigungskräfte durch die zusätzliche Hebelübersetzung geringer ausfallen können als bei einem zentralen Kupplungssteller bei ansonsten gleich ausgeführter Kupplung.

Erfindungsgemäß ist auch ein Fahrzeug, insbesondere ein Nutzfahrzeug, vorgesehen, aufweisend einen Betätigungsmechanismus wie oben beschrieben und/oder einen Aktuator wie oben beschrieben.

Die Erfindung ist nicht auf die oben beschriebenen Ausführungsformen begrenzt. Vielmehr lassen sich durch Kombination, Weglassen und/oder Austauschen einzelner Merkmale weitere Gegenstände ausbilden, die ebenso in den beanspruchten Schutzbereich fallen. Beispielsweise kann der Rückhaltemechanismus eine Blockierung in formschlüssiger Weise umfassen, welche beispielsweise durch ein Rückhalteelement, das als Stift ausgebildet ist, das in ein eine Aussparung begrenzendes Gegenelement eingreift, verwirklicht ist, wobei zusätzlich ein Rückhalteelement vorgesehen ist, das zusammen mit einem weiteren Gegenelement eine reibschlüssige Blockierung ausbildet.

Nachfolgend erfolgt die Beschreibung bevorzugter Ausführungsformen der Erfindung anhand der beigefügten Zeichnungen.

### Im Einzelnen zeigen

- Fig. 1: eine erste Ausführungsform der Erfindung,
- Fig. 2: eine zweite Ausführungsform der Erfindung,
- Fig. 3: eine dritte Ausführungsform der Erfindung,
- Fig. 4: eine vierte Ausführungsform der Erfindung,
- Fig. 5: eine fünfte Ausführungsform der Erfindung,
- Fig. 6: eine sechste Ausführungsform der Erfindung,
- Fig. 7: eine siebte Ausführungsform der Erfindung, und
- Fig. 8: eine achte Ausführungsform der Erfindung.

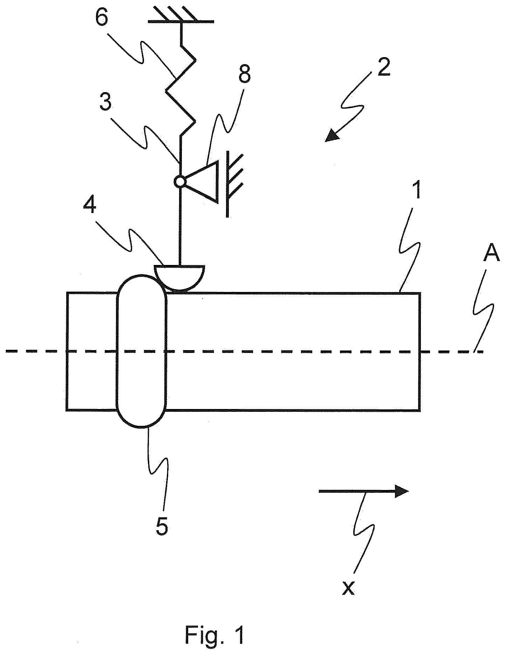

**Fig. 1** zeigt eine erste Ausführungsform der Erfindung.

Es ist ein Übertragungselement 1 gezeigt, das sich von links nach rechts erstreckt. Das Übertragungselement 1 weist eine Achse A auf die sich ebenfalls von links nach rechts erstreckt und die parallel zu einer Betätigungsrichtung x orientiert ist, wobei das Übertragungselement 1 parallel zu der Betätigungsrichtung x verschiebbar ausgebildet ist.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Auf dem Übertragungselement 1 ist ein Gegenelement 5 als Bestandteil eines Rückhaltemechanismus' 2 ausgebildet, das sich radial um die Achse A von der Oberfläche das Übertragungselementes 1 erstreckt. Das Gegenelement 5 weist in dieser Darstellung eine abgerundete Form auf.

Von oben erstreckt sich als ein weiterer Bestandteil des Rückhaltemechanismus' 2 ein Rückhalteelement 3, das durch eine Führung 8 senkrecht zur Achse A geführt ist. Das untere Ende des Rückhalteelementes 3 weist ein Kontaktelement 4 auf, das sich mit der Oberfläche des Übertragungselementes 1 und dem Gegenelement 5 in Kontakt befindet.

Das Rückhalteelement 3 wird durch ein Vorspannelement 6, das einen weiteren Bestandteil des Rückhaltemechanismus' 2 darstellt, mit einer Vorspannkraft senkrecht zur Achse A beaufschlagt, so dass sichergestellt ist, dass das Kontaktelement 4 mit der Oberfläche des Übertragungselementes 1 bzw. mit dem Gegenelement 5 in Kontakt tritt.

Das Kontaktelement 4 weist gegenüber dem Übertragungselement 1 und dem Gegenelement 5 eine abgerundete Form auf, um den Anlagepunkt im Kontakt von Rückhalteelement 3 und Gegenelement 5 genau zu definieren und um ein Abgleiten des Gegenelements 5 bei ausreichend hoher Betätigungskraft sicherzustellen.

Die Funktionsweise des gezeigten Rückhaltemechanismus' 2 stellt sich wie folgt dar.

In der gezeigten Darstellung liegen das Kontaktelement 4 des Rückhalteelementes 3 und das Gegenelement 5 aneinander an, wobei dadurch eine Gegenkraft auf das Übertragungselement 1 entgegen der Betätigungsrichtung x ausgeübt wird. Dadurch wird dessen Verschiebung in Betätigungsrichtung x blockiert. Das Übertragungselement 1 wird dabei beispielsweise durch eine Nachstellkraft (nicht dargestellt) nach rechts beaufschlagt, die im normalen Betrieb dafür sorgt, dass das Übertragungselement 1 eine Nachstellbewegung durchführt. Die Gegenkraft, die auf das Übertragungselement 1 durch den Rückhaltemechanismus 2 ausgeübt wird, ist daher so gewählt, dass sie die Nachstellkraft kompensiert.

Ist der Betätigungsmechanismus montiert bzw. soll das Übertragungselement 1 aus der durch den Rückstellmechanismus 2 blockierten Stellung herausbewegt werden, so wird eine Betätigungskraft (nicht dargestellt) auf das Übertragungselement 1 in Betätigungsrichtung x aufgebracht, die einen vorbestimmten Mindestwert überschreitet, so dass das Rückhalteelement 3 aus der gezeigten Stellung nach oben bewegt wird und so dass das Übertragungselement 1 und insbesondere das Gegenelement 5 darunter vorbeibewegt werden kann.

Der vorbestimmte Mindestwert der Betätigungskraft wird dabei insbesondere bestimmt durch das Vorspannelement 6, die Geometrie des Kontaktelementes 4 sowie des Gegenelementes 5. Ferner hat auch die Orientierung des Rückhalteelementes 3 bzw. dessen Verschiebungsrichtung, die durch die Führung 8 bestimmt ist, Einfluss auf den vorbestimmten Mindestwert der Betätigungskraft.

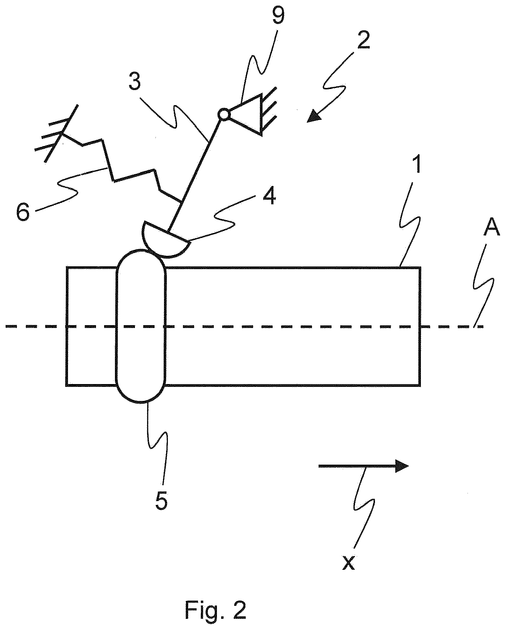

**Fig. 2** zeigt eine zweite Ausführungsform der Erfindung.

Die hier gezeigte Ausführungsform unterscheidet sich von der in Fig. 1 gezeigten Ausführungsform durch den Rückhaltemechanismus 2 und hier insbesondere durch die Ausbildung des Rückhalteelementes 3. Das Übertragungselement 1 mit dem darauf ausgebildeten Gegenelement 5 entspricht dem in Fig. 1. Daher wird hierzu auf die obige Beschreibung verwiesen.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Das Rückhalteelement 3 ist hier um einen Drehpunkt 9 drehbar bzw. schwenkbar vorgesehen, wobei durch ein Vorspannelement 6 eine Kraft bzw. ein Moment auf das Rückhalteelement 3 aufgebracht wird, wodurch das Rückhalteelement 3 eine Vorspannung im Uhrzeigersinn um den Drehpunkt 9 erfährt. Das Ende des Rückhalteelementes 3, das zum Übertragungselement 1 weist, weist ein Kontaktelement 4 auf. Dieses kann wie in Fig. 1 beschrieben ausgebildet sein.

Die Funktionsweise des gezeigten Rückhaltemechanismus' 2 stellt sich wie folgt dar.

In der gezeigten Darstellung liegen das Kontaktelement 4 des Rückhalteelementes 3 und das Gegenelement 5 aneinander an, wobei dadurch eine Gegenkraft auf das Übertragungselement 1 entgegen der Betätigungsrichtung x ausgeübt wird. Dadurch wird dessen Verschiebung in Betätigungsrichtung x blockiert. Das Übertragungselement 1 kann beispielsweise durch eine Nachstellkraft wie zu Fig. 1 beschrieben nach rechts beaufschlagt sein. Die Gegenkraft, die auf das Übertragungselement 1 durch den Rückhaltemechanismus 2 ausgeübt wird, ist daher so gewählt, dass sie die Nachstellkraft kompensiert.

Ist der Betätigungsmechanismus montiert bzw. soll das Übertragungselement 1 aus der durch den Rückstellmechanismus 2 blockierten Stellung herausbewegt werden, so wird eine Betätigungskraft (nicht dargestellt) auf das Übertragungselement 1 in Betätigungsrichtung x aufgebracht, die einen vorbestimmten Mindestwert überschreitet, so dass das Rückhalteelement 3 aus der gezeigten Stellung um den Drehpunkt 9 im Gegenuhrzeigersinn geschwenkt wird, so dass das Übertragungselement 1 und insbesondere das Gegenelement 5 darunter vorbeibewegt werden kann.

Der vorbestimmte Mindestwert der Betätigungskraft wird dabei insbesondere bestimmt durch das Vorspannelement 6, die Geometrie des Kontaktelementes 4 sowie des Gegenelementes 5. Ferner hat auch die Orientierung des Rückhalteelementes 3 bzw. dessen Schwenkbewegung, die durch den Drehpunkt 9 bestimmt ist, Einfluss auf den vorbestimmten Mindestwert der Betätigungskraft.

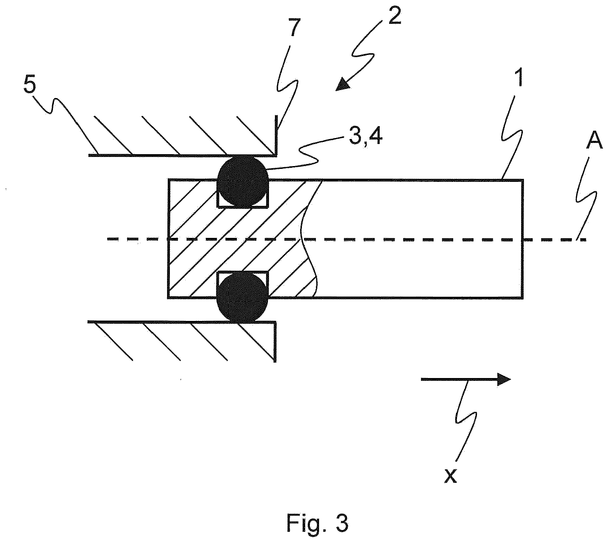

**Fig. 3** zeigt eine dritte Ausführungsform der Erfindung.

Es ist ein Übertragungselement 1 gezeigt, das sich von links nach rechts erstreckt. Das Übertragungselement 1 weist eine Achse A auf die sich ebenfalls von links nach rechts erstreckt und die parallel zu einer Betätigungsrichtung x orientiert ist, wobei das Übertragungselement 1 parallel zu der Betätigungsrichtung x verschiebbar ausgebildet ist.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Das gezeigte Übertragungselement 1, das im Wesentlichen den Übertragungselementen 1 aus den vorangegangenen Figuren entspricht, weist im Unterschied zu diesen auf seiner Oberfläche eine umlaufende Vertiefung, beispielsweise eine Nut auf. In dieser Vertiefung ist als Bestandteil des Rückhaltemechanismus' 2 ein Rückhalteelement 3 aufgenommen. Dieses erstreckt sich hier ringförmig in der Vertiefung um die Achse A des Übertragungselementes 1.

Das Rückhalteelement 3 ist hier verformbar ausgebildet. Ferner bildet das Rückhalteelement 3 als Ganzes ein Kontaktelement 4 aus, um mit einem Gegenelement 5 in Kontakt zu treten, um so eine Blockierungswirkung des Rückhaltemechanismus' 2 auf das Übertragungselement 1 auszubilden.

Das Gegenelement 5 ist hier auf einer Innenfläche eines Gehäuses 7 ausgebildet.

Das Gegenelement 5 und das Rückhalteelement 3 sind hier so zueinander ausgerichtet, dass wenn, wie in der Abbildung des Betätigungsmechanismus' 2 gezeigt, das Übertragungselement 1 nach links bewegt wird, so dass das Rückhalteelement 3 mit dem Gegenelement 5 in Kontakt tritt. Dabei erfolgt eine Verformung des Rückhalteelementes 3 quer bzw. radial zur Achse A, bzw. das Rückhalteelement 3 wird in die umlaufende Vertiefung des Übertragungselementes 1 gepresst, so dass sich zwischen dem Rückhalteelement 3 und dem Gegenelement 5 eine Anpresskraft einstellt, die eine Reibkraft parallel zur Achse A, insbesondere entgegen der Betätigungsrichtung x, bewirkt. Diese Reibkraft bildet die Blockierung des Übertragungselementes 1 parallel zur Betätigungsrichtung x aus.

Das Rückhalteelement 3 weist hier beispielsweise einen verformbaren Gummiring und/oder einen verformbaren Metallring auf, der jeweils dazu ausgebildet ist, sich bei Kontakt mit dem Gegenelement 5 zu verformen, um so die benötigte Anpress- und Reibkraft hervorzurufen. Das Rückhalteelement 3 kann insbesondere zur elastischen Verformung ausgebildet sein. Es sind jedoch auch Ausführungsformen denkbar, bei denen das Rückhalteelement 3 dauerhaft verformt oder sogar durch die Verformung zerstört werden kann.

Das Gegenelement 5 kann hier, wie gezeigt als Fläche im Gehäuse 7 ausgebildet sein. Diese kann insbesondere als Bohrung im Gehäuse 7 ausgebildet sein, in der ein Abschnitt des Übertragungselementes 1 eingeführt werden kann, auf dem das Rückhalteelement 3 vorgesehen ist, wenn das Übertragungselement 1 entgegen der Betätigungsrichtung x bewegt wird.

Wie hier gezeigt, ist das Gegenelement 5 als Fläche ausgebildet, die parallel zur Betätigungsrichtung x orientiert ist. Die Fläche kann jedoch auch gegenüber der Betätigungsrichtung x geneigt ausgebildet sein. So kann der Abstand zwischen der Achse A und dem Gegenelement 5 entgegen der Betätigungsrichtung x abnehmen. Dies hat den Vorteil, dass die Anpresskraft zwischen dem Rückhalteelement 3 und dem Gegenelement 5 bei einer Bewegung des Übertragungselementes 1 nach links zunimmt. Dadurch nimmt auch die hervorgerufene Reibkraft und damit auch die Blockierung des Übertragungselementes 1 zu. Somit ist eine sicherere Blockierung des Rückhalteelementes 1 erreichbar. In einer Ausführungsform kann das Gegenelement 5 eine sich entgegen der Betätigungsrichtung x verjüngende Innenfläche einer Bohrung, insbesondere im Gehäuse 7, aufweisen.

Die hier gezeigte Ausführungsform des Betätigungsmechanismus' weist einen Rückhaltemechanismus 2 auf, der die Blockierung des Übertragungselementes 1 mittels einer Reibkraft im Kontakt zwischen dem Rückhalteelement 3 und dem Gegenelement 5 ausbildet.

In der in der Zeichnung gezeigten Anordnung ist der Rückhaltemechanismus 2 mit dem Rückhalteelement 3 und dem Gegenelement 5 in Kontakt gezeigt. Somit ist die Blockierung ausgebildet. Ist der Betätigungsmechanismus montiert bzw. soll das Übertragungselement 1 aus der durch den Rückhaltemechanismus 2 blockierten Stellung herausbewegt werden, so wird eine Betätigungskraft (nicht dargestellt) auf das Übertragungselement 1 in Betätigungsrichtung x aufgebracht, die einen vorbestimmten Mindestwert überschreitet, so dass das Übertragungselement 1 in Betätigungsrichtung x bewegt werden kann und sich das Rückhalteelement 3 und das Gegenelement 5 voneinander lösen. Der vorbestimmte Mindestwert der Betätigungskraft wird dabei insbesondere durch die Verformbarkeit des Rückhalteelementes 3 und des Gegenelements 5, die Geometrie des Rückhalteelementes 3, des Kontaktelementes 4 sowie des Gegenelementes 5, das Material des Rückhalteelementes 3 und des Gegenelements 5, sowie deren Oberflächenbeschaffenheit, bestimmt.

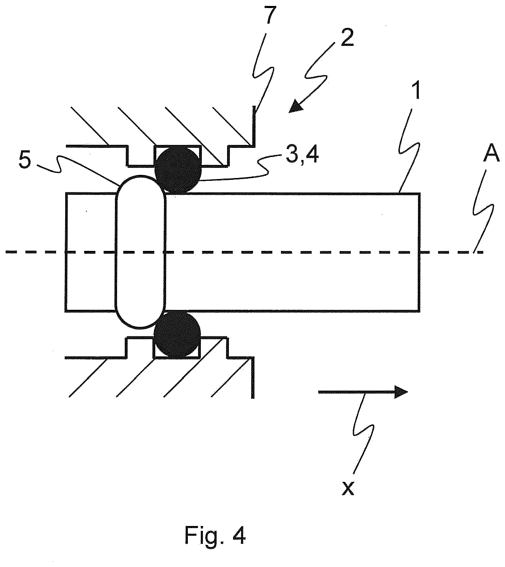

**Fig. 4** zeigt eine vierte Ausführungsform der Erfindung.

Es ist ein Übertragungselement 1 gezeigt, das sich von links nach rechts erstreckt. Das Übertragungselement 1 weist eine Achse A auf die sich ebenfalls von links nach rechts erstreckt und die parallel zu einer Betätigungsrichtung x orientiert ist, wobei das Übertragungselement 1 parallel zu der Betätigungsrichtung x verschiebbar ausgebildet ist.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Auf dem Übertragungselement 1 ist ein Gegenelement 5 als Bestandteil eines Rückhaltemechanismus' 2 ausgebildet, das sich radial um die Achse A von der Oberfläche das Übertragungselementes 1 erstreckt. Das Gegenelement 5 weist in dieser Darstellung eine abgerundete Form auf.

Dazu korrespondierend ist als weiterer Bestandteil des Rückhaltemechanismus' 2 ein Rückhalteelement 3 vorgesehen, das ortsfest, beispielsweise in einer Vertiefung im Gehäuse 7, vorgesehen ist. Das Rückhalteelement 3 erstreckt sich hier ringförmig in der Vertiefung um die Achse A des Übertragungselementes 1.

Das Rückhalteelement 3 kann hier im Wesentlichen wie das Rückhalteelement 3 in Fig. 3 ausgebildet sein. Hierfür wird auf die Ausführungen zu Fig. 3 verwiesen. Insbesondere ist das Rückhalteelement 3 verformbar ausgebildet. Das Rückhalteelement 3 weist ferner beispielsweise einen verformbaren Gummiring und/oder einen verformbaren Metallring auf, der jeweils dazu ausgebildet ist, sich bei Kontakt mit dem Gegenelement 5 zu verformen. Das Rückhalteelement 3 kann insbesondere zur elastischen Verformung ausgebildet sein. Es sind jedoch auch Ausführungsformen denkbar, bei denen das Rückhalteelement 3 dauerhaft verformt oder sogar durch die Verformung zerstört werden kann.

Ferner bildet das Rückhalteelement 3 als Ganzes ein Kontaktelement 4 aus, um mit einem Gegenelement 5 in Kontakt zu treten, um so eine Blockierungswirkung des Rückhaltemechanismus' 2 auf das Übertragungselement 1 auszubilden.

Die Funktionsweise des gezeigten Rückhaltemechanismus' 2 stellt sich wie folgt dar.

In der gezeigten Darstellung liegen das Rückhalteelement 3 und das Gegenelement 5 aneinander an, wodurch einer Bewegung des Übertragungselementes 1 in Betätigungsrichtung x eine Gegenkraft entgegenwirkt, die dann zwischen Rückhalteelement 3 und Gegenelement 5 wirkt. Dadurch wird dessen Verschiebung in Betätigungsrichtung x blockiert. Das Übertragungselement 1 wird dabei beispielsweise durch eine Nachstellkraft (nicht dargestellt) nach rechts beaufschlagt, die im normalen Betrieb dafür sorgt, dass das Übertragungselement 1 eine Nachstellbewegung durchführt. Die Gegenkraft, die auf das Übertragungselement 1 durch den Rückhaltemechanismus 2 ausgeübt wird, ist daher so gewählt, dass sie die Nachstellkraft kompensiert.

Ist der Betätigungsmechanismus montiert bzw. soll das Übertragungselement 1 aus der durch den Rückstellmechanismus 2 blockierten Stellung herausbewegt werden, so wird eine Betätigungskraft (nicht dargestellt) auf das Übertragungselement 1 in Betätigungsrichtung x aufgebracht, die einen vorbestimmten Mindestwert überschreitet, so dass das Rückhalteelement 3 in die im Gehäuse 7 befindliche Vertiefung hineingedrückt wird und sich soweit verformt, dass das Gegenelement 5 in Betätigungsrichtung x an dem Rückhalteelement 3 vorbeibewegt werden kann. Der vorbestimmte Mindestwert der Betätigungskraft wird dabei insbesondere durch die Verformbarkeit des Rückhalteelementes 3 und des Gegenelementes 5, die Geometrie des Rückhalteelementes 3, des Kontaktelementes 4 sowie des Gegenelementes 5, das Material des Rückhalteelementes 3 und des Gegenelements 5, sowie deren Oberflächenbeschaffenheit, bestimmt.

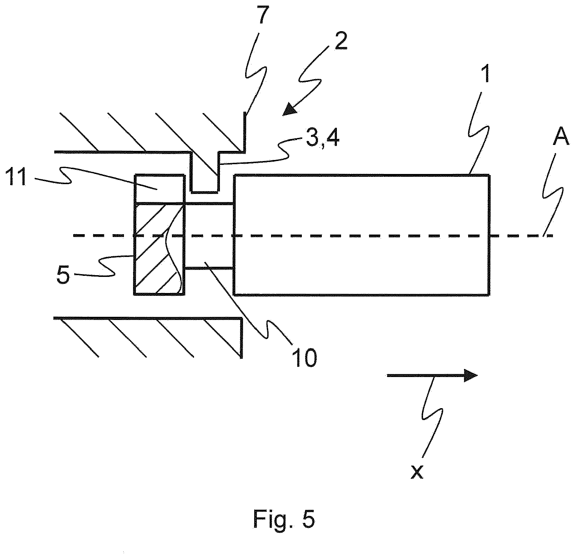

**Fig. 5** zeigt eine fünfte Ausführungsform der Erfindung.

Es ist ein Übertragungselement 1 gezeigt, das sich von links nach rechts erstreckt. Das Übertragungselement 1 weist eine Achse A auf die sich ebenfalls von links nach rechts erstreckt und die parallel zu einer Betätigungsrichtung x orientiert ist, wobei das Übertragungselement 1 parallel zu der Betätigungsrichtung x verschiebbar ausgebildet ist.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Am linken Ende des Übertragungselementes 1 ist ein Gegenelement 5 als Bestandteil eines Rückhaltemechanismus' 2 ausgebildet. Das Gegenelement 5 ist in der Zeichnung als linksseitige Begrenzung einer Aussparung 10 ausgebildet, die sich, insbesondere als Nut, um die Achse A auf dem Übertragungselement 1 erstreckt. Das Gegenelement 5 weist eine Aussparung 11 auf, die sich, insbesondere als Nut, auf dem Gegenelement 5 parallel zur Achse A auf dem Gegenelement 5 erstreckt, nach rechts in die Aussparung 10 mündet und nach links bis an das linke Ende des Gegenelementes 5 fortgeführt ist.

Ortsfest gegenüber dem Übertragungselement 1 ist als weiterer Bestandteil des Rückhaltemechanismus' 2 ein Rückhalteelement 3 vorgesehen, das gleichzeitig als Kontaktelement 4 zum Kontakt mit dem Gegenelement 5 ausgebildet ist. Das Rückhalteelement 3 kann beispielsweise wie gezeigt einstückig mit einem Gehäuse 7 des Betätigungsmechanismus ausgebildet sein.

Die Funktionsweise des gezeigten Rückhaltemechanismus' 2 stellt sich wie folgt dar.

Um eine Blockierung des Übertragungselementes 1 in Betätigungsrichtung x auszubilden, müssen Rückhalteelement 3 und Gegenelement 5 bei einer Bewegung des Übertragungselementes 1 in Betätigungsrichtung x aneinanderstoßen. Dadurch wird die Blockierung des Übertragungselementes 1 erreicht.

Hierzu wird das Gegenelement 5 um die Achse A, beispielsweise um 180°, gedreht, so dass Rückhalteelement 3 und Aussparung 11 nicht mehr in Betätigungsrichtung x miteinander fluchten. Das Übertragungselement 1 wird beispielsweise durch eine Nachstellkraft (nicht dargestellt) nach rechts beaufschlagt, die im normalen Betrieb dafür sorgt, dass das Übertragungselement 1 eine Nachstellbewegung in Betätigungsrichtung x durchführt. Bei verdrehtem Gegenelement 5 ist diese Nachstellbewegung durch Rückhalteelement 3 und Gegenelement 5 blockiert.

Zusätzlich kann eine Möglichkeit einer Sicherung vorgesehen sein, so dass verhindert wird, dass Rückhalteelement 3 und Aussparung 11 zur Unzeit miteinander fluchtend ausgerichtet werden.

Ist der Betätigungsmechanismus montiert bzw. soll das Übertragungselement 1 aus der durch den Rückstellmechanismus 2 blockierten Stellung herausbewegt werden, so wird zunächst wieder durch ein Drehen des Gegenelementes 5 um die Achse A in die in der Zeichnung gezeigte Stellung eine in Betätigungsrichtung x fluchtende Ausrichtung von Rückhalteelement 3 und der Aussparung 11 hergestellt. Anschließend kann eine Betätigungskraft (nicht dargestellt) auf das Übertragungselement 1 in Betätigungsrichtung x aufgebracht werden, so dass das Übertragungselement 1 in Betätigungsrichtung x verschoben werden kann. Das Gegenelement 5 wird dabei an dem Rückhalteelement 3 vorbeibewegt, da das Rückhalteelement 3 sich bei der Bewegung in der Aussparung 11 befindet. Dabei kann die Bewegung des Übertragungselementes 1 auch ohne Aufbringen einer Betätigungskraft erfolgen, wenn die Nachstellkraft auf das Übertragungselement 1 wirkt.

Das Drehen des Gegenelementes 5 um die Achse A kann hier beispielsweise durch Drehen des Übertragungselementes 1 erfolgen, wenn beide einstückig ausgebildet sind. Das Gegenelement 5 kann jedoch unabhängig von dem Übertragungselement 1 drehbar um die Achse A vorgesehen sein.

Der hier gezeigte Rückhaltemechanismus 2 ist hier als ein Bajonettverschluss ausgebildet. Dazu kann weiter vorgesehen sein, dass die Aussparung 10 eine Ausbuchtung aufweist, in die das Rückhalteelement 3 bei Drehen des Gegenelements 5 rutscht, wodurch eine sichere Ausbildung der Blockierung erreicht wird.

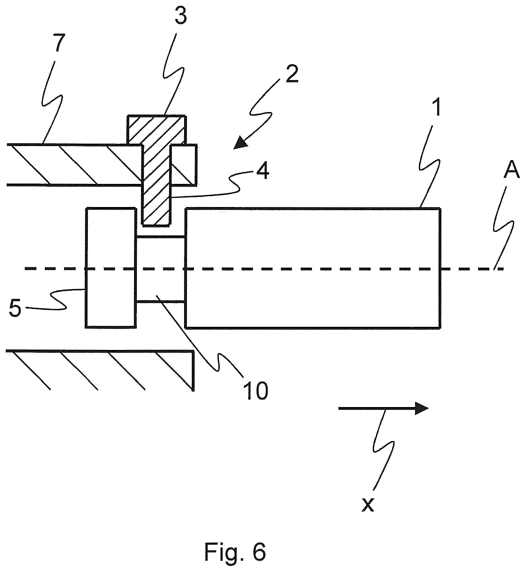

**Fig. 6** zeigt eine sechste Ausführungsform der Erfindung.

Diese Ausführungsform ist im Wesentlichen mit der in Fig. 5 gezeigten Ausführungsform identisch. Daher wird hier lediglich auf die Unterschiede eingegangen.

Das Rückhalteelement 3 ist hier nicht als Teil des Gehäuses 7 ausgebildet. Stattdessen ist es als separates Bauteil ausgebildet und greift durch eine Bohrung im Gehäuse 7 mit seinem Kontaktelement 4 in die Aussparung 10 auf dem Übertragungselement 1 ein, die der Aussparung 10 in Fig. 5 entspricht. Das Rückhalteelement 3 kann insbesondere in die Bohrung geschraubt sein oder lediglich als Stift eingesteckt sein. Das Rückhalteelement 3 weist an seinem in der Zeichnung oberen Ende eine Verdickung auf, die an dem Gehäuse 7 anschlägt und eine definierte Einführlänge des Kontaktelementes 4 in die Aussparung 10 erlaubt. Ist das Rückhalteelement 3 lediglich eingesteckt, so muss es zusätzlich gegen Herausfallen gesichert werden, beispielsweise mittels eines Klebestreifens.

Im Gegensatz zu der Ausführungsform aus Fig. 5 weist das Gegenelement 5 keine Aussparung 11 auf, die sich parallel zur Achse A auf dem Gegenelement 5 erstreckt.

Um die Blockierung einer Bewegung des Übertragungselementes 1 in Betätigungsrichtung x durch den Rückhaltemechanismus 2 zu lösen, wird das Rückhalteelement 3 aus der Bohrung des Gehäuses 7 entfernt, so dass das Rückhalteelement 3 mit dem Kontaktelement 4 nicht mehr mit der Aussparung 10 in Eingriff steht. Das Gegenelement 5 kann nun zusammen mit dem Übertragungselement ungehindert in Betätigungsrichtung x bewegt werden.

Handelt es sich bei der Bohrung im Gehäuse 7, aus der das Rückhalteelement 3 entfernt wird, um eine Öffnung zur Umgebung, so kann ein Stopfen in die Bohrung eingefügt, insbesondere eingeschraubt, werden, um das Gehäuse 7 gegenüber der Umgebung abzudichten.

Auch diese Ausführungsform kann einen Bajonettverschluss wie zu Fig. 5 beschrieben aufweisen, in dem das Rückhalteelement 3 gesichert werden kann.

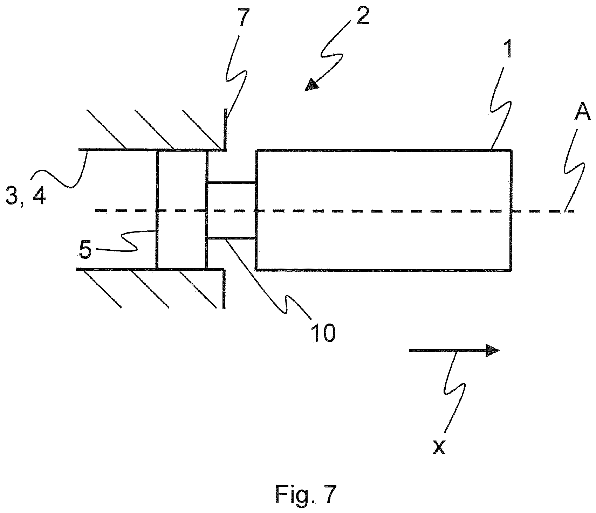

**Fig. 7** zeigt eine siebte Ausführungsform der Erfindung.

Es ist ein Übertragungselement 1 gezeigt, das sich von links nach rechts erstreckt. Das Übertragungselement 1 weist eine Achse A auf die sich ebenfalls von links nach rechts erstreckt und die parallel zu einer Betätigungsrichtung x orientiert ist, wobei das Übertragungselement 1 parallel zu der Betätigungsrichtung x verschiebbar ausgebildet ist.

Die Verschiebung des Übertragungselementes 1 in Betätigungsrichtung x kann durch eine Betätigungskraft (nicht dargestellt) in Betätigungsrichtung x erreicht werden, die über einen Kompensationsmechanismus (nicht dargestellt) auf das Übertragungselement 1 wirkt.

Am linken Ende des Übertragungselementes 1, abgegrenzt von einer Aussparung, die als um die Achse A umlaufende Vertiefung ausgebildet ist, ist ein Gegenelement 5 als Bestandteil eines Rückhaltemechanismus' 2 ausgebildet.

Ein Rückhalteelement 3 ist als weiterer Bestandteil des Rückhaltemechanismus' 2 als Bohrung in einem Gehäuse 7 ausgebildet, wobei dadurch gänzlich ein Kontaktelement 4 ausgebildet ist.

Das Rückhalteelement 3 weist ein Innengewinde (nicht dargestellt) und das Gegenelement 5 ein korrespondierendes Außengewinde (nicht dargestellt) auf, die in der in der Zeichnung gezeigten Anordnung miteinander verschraubt sind. Auf diese Weise bildet der Rückhaltemechanismus 2 die Blockierung des Übertragungselementes 1 in Betätigungsrichtung x aus.

Soll die Blockierung gelöst werden, muss die Verschraubung zwischen Rückhalteelement 3 und Gegenelement 5 gelöst werden. Dies erfolgt durch eine Drehung des Gegenelementes 5 um die Achse A. Das Gegenelement 5 kann bei einstückiger Ausbildung mit dem Übertragungselement 1 durch Drehen des Übertragungselements 1 um die Achse A gedreht werden. Das Gegenelement 5 kann jedoch auch als separates Bauteil an dem Übertragungselement 1 vorgesehen sein und unabhängig von diesem gedreht werden können.

**Fig. 8** zeigt eine achte Ausführungsform der Erfindung.

Im Wesentlichen handelt es sich dabei um eine Abwandlung der Ausführungsform aus Fig. 1. Daher werden nachfolgend insbesondere die Unterschiede zu dieser Ausführungsform erläutert.

Es ist ein Übertragungselement 1 gezeigt, das dem aus Fig. 1 entspricht.

Von oben erstreckt sich als ein weiterer Bestandteil des Rückhaltemechanismus' 2 ein Rückhalteelement 3, das durch eine Führung 8 senkrecht zur Achse A geführt ist. Das untere Ende des Rückhalteelementes 3 weist ein Kontaktelement 4 auf, das sich mit der Oberfläche des Übertragungselementes 1 und dem Gegenelement 5 in Kontakt befindet.

Oberhalb des Rückhalteelementes 3 ist ein Vorspannelement 6, das einen weiteren Bestandteil des Rückhaltemechanismus' 2 darstellt, angeordnet. Rückhalteelement 3 und Vorspannelement 6 können einstückig oder separat ausgebildet sein. Bei einstückiger Ausbildung können das Rückhalteelement 3 und das Vorspannelement 6 auch identisch sein. Beispielsweise kann darunter ein elastisches Element in einer radialen Führung verstanden werden, wie beispielsweise ein Gummiring.

Oberhalb des Vorspannelementes 6 ist im Gegensatz zu der Ausführungsform von Fig. 1 ein Anschlag 12, beispielsweise gehäusefest, ausgebildet, wobei das Vorspannelement 6 in der gezeigten Darstellung von diesem beabstandet ist.

Das Kontaktelement 4 entspricht dem aus Fig. 1.

Die Funktionsweise des gezeigten Rückhaltemechanismus' 2 stellt sich wie folgt dar.

Dadurch dass der Verbund aus Rückhalteelement 3 und Vorspannelement 6 in der gezeigten Darstellung nicht an dem Anschlag 12 anliegt, wird das Kontaktelement 4 nicht unter Vorspannung auf das Übertragungselement 1 bzw. das Gegenelement 5 gedrückt.

In der gezeigten Darstellung liegen das Kontaktelement 4 des Rückhalteelementes 3 und das Gegenelement 5 aneinander an. Das Übertragungselement 1 wird dabei beispielsweise durch eine Nachstellkraft (nicht dargestellt) nach rechts beaufschlagt, die im normalen Betrieb dafür sorgt, dass das Übertragungselement 1 eine Nachstellbewegung durchführt. Dabei wird in der gezeigten Konfiguration noch keine Gegenkraft auf das Übertragungselement 1 ausgeübt, die ausreicht, um dessen Verschiebung in Betätigungsrichtung x zu blockieren.

Durch eine Verschiebung des Übertragungselementes 1 in Betätigungsrichtung x wird gleichzeitig der Verbund aus Rückhalteelement 3 und Vorspannelement 6 durch die Wechselwirkung des Kontaktelementes 4 mit dem Gegenelement 5, welche miteinander in Kontakt stehen, nach oben verschoben, wobei er durch die Führung 8 geführt wird. Sobald der Verbund aus Rückhalteelement 3 und Vorspannelement 6 dabei mit dem Anschlag 12 in Kontakt tritt, bildet er eine Gegenkraft aus, die über den Kontakt zwischen Kontaktelement 4 und Gegenelement 5 auf das Übertragungselement 1 wirkt, und dadurch dessen Verschiebung in Betätigungsrichtung x blockiert.

Die Gegenkraft, die auf das Übertragungselement 1 durch den Rückhaltemechanismus 2 ausgeübt wird, ist so gewählt, dass sie die Nachstellkraft kompensiert, die auf das Übertragungselement 1 in Betätigungsrichtung x wirkt.

Ist der Betätigungsmechanismus montiert bzw. soll das Übertragungselement 1 aus der durch den Rückstellmechanismus 2 blockierten Stellung herausbewegt werden, so wird eine Betätigungskraft (nicht dargestellt) auf das Übertragungselement 1 in Betätigungsrichtung x aufgebracht, die einen vorbestimmten Mindestwert überschreitet, so dass das Rückhalteelement 3 aus der gezeigten Stellung nach oben bewegt wird und so dass das Übertragungselement 1 und insbesondere das Gegenelement 5 darunter vorbeibewegt werden kann. Dabei wird das Vorspannelement 6 zusammengedrückt.

Der vorbestimmte Mindestwert der Betätigungskraft wird dabei insbesondere bestimmt durch das Vorspannelement 6, die Geometrie des Kontaktelementes 4 sowie des Gegenelementes 5. Ferner hat auch die Orientierung des Rückhalteelementes 3 bzw. dessen Verschiebungsrichtung, die durch die Führung 8 bestimmt ist, Einfluss auf den vorbestimmten Mindestwert der Betätigungskraft. Schließlich beeinflusst auch die freie Wegstrecke bis der Verbund aus Rückhalteelement 3 und Vorspannelement 6 an dem Anschlag 12 anstößt den Mindestwert der Betätigungskraft.

Die in den Zeichnungen gezeigten Ausführungsformen stellen einerseits eigenständige Lösungen dar. Andererseits ist dadurch jedoch nicht ausgeschlossen, dass einzelne Lösungen miteinander kombiniert werden. Beispielsweise kann die Verschraubung aus Fig. 7 jeder anderen Ausführungsform hinzugefügt werden. Auch die Ausführungsformen der Figuren 5 und 6 können beispielsweise zusätzlich mit den anderen Ausführungsformen kombiniert werden. Auch eine Ausführungsform, die eine Blockierung des Übertragungselementes 1 rein durch Reibung erreicht, kann ergänzend den anderen Ausführungsformen hinzugefügt werden.

Ist eine Verformung des Rückhalteelementes 3 und/oder des Gegenelementes 5 zur Lösung der Blockierung nötig, so kann diese elastisch erfolgen. Es kann jedoch auch vorgesehen sein, dass das Rückhalteelement 3 und/oder das Gegenelement 5 bei Verformung zerstört oder zumindest dauerhaft verformt wird.

Die gezeigten Ausführungsformen in Fig. 1 und Fig. 8 weisen Führungen 8 auf. Diese sind dazu ausgebildet, eine Längsführung des Rückhalteelementes 3 parallel zu einer Richtung von oben nach unten zu gewährleisten. Dabei ist sowohl eine momentfreie Längsführung denkbar, die eine Drehung des Rückhalteelementes 3 zumindest in der Zeichenebene erlaubt, als auch eine Längsführung, die keine Drehung des Rückhalteelementes 3 erlaubt.

Zudem sind Ausführungsformen möglich, die keine Führungen 8 aufweisen.

Die Rückhaltemechanismen 2 der Figuren 1, 2 und 8 können in einer weiteren Ausführungsform um die Achse A herum angeordnet sein. Dies bedeutet, dass mindestens ein weiteres Rückhaltelement 3 vorgesehen ist, wobei die Rückhalteelemente 3 bevorzugt regelmäßig zueinander um die Achse A herum beabstandet sind.

Der Drehpunkt 9 der Ausführungsform von Fig. 2 kann ein tatsächliches Gelenk darstellen oder als Biegebereich ausgebildet sein. In diesem Fall ist das Rückhalteelement 3 einstückig mit dem Drehpunkt 9 verbunden, wobei es sich um diesen Drehpunkt 9 biegt. Dies entspricht beispielsweise einem Biegeelement, wie es bei einer Tellerfeder eingesetzt ist. Speziell kann die Ausführungsform aus Fig. 2 daher auch Rückhalteelemente 3 aufweisen, die Bestandteile einer Tellerfeder sind.

### BEZUGSZEICHENLISTE

- 1: Übertragungselement
- 2: Rückhaltemechanismus
- 3: Rückhalteelement
- 4: Kontaktelement
- 5: Gegenelement
- 6: Vorspannelement
- 7: Gehäuse
- 8: Führung
- 9: Drehpunkt
- 10: Aussparung
- 11: Aussparung
- 12: Anschlag
- A: Achse
- x: Betätigungsrichtung

## Patentansprüche

1. Betätigungsmechanismus aufweisend:
- ein Übertragungselement (1), das dazu ausgebildet ist, durch eine Betätigungskraft, die auf den Betätigungsmechanismus aufgebracht wird, parallel zu einer Betätigungsrichtung (x) verschoben zu werden; und
- einen Rückhaltemechanismus (2), der dazu ausgebildet ist, eine Verschiebung des Übertragungselements (1) parallel zu der Betätigungsrichtung (x) zu blockieren,
**dadurch gekennzeichnet, dass**
der Rückhaltemechanismus (2) dazu ausgebildet ist, das Übertragungselement (1) an einer Position entlang der Betätigungsrichtung (x) zu blockieren, die außerhalb eines Arbeitshubes des Übertragungselementes (1) liegt.

2. Betätigungsmechanismus nach Anspruch 1, aufweisend:
- einen Kompensationsmechanismus, der dazu ausgebildet ist, eine Verbindung zur Übertragung der Betätigungskraft auf das Übertragungselement (1) herzustellen, wenn eine Betätigungskraft auf den Betätigungsmechanismus aufgebracht wird, und der dazu ausgebildet ist, die Verbindung zu lösen, wenn keine Betätigungskraft auf den Betätigungsmechanismus aufgebracht wird, wobei
das Übertragungselement (1) bei gelöster Verbindung vorzugsweise relativbeweglich zu dem Kompensationsmechanismus vorgesehen ist, und/oder wobei
der Rückhaltemechanismus (2) vorzugsweise dazu ausgebildet ist, die Verschiebung des Übertragungselements (1) parallel zu der Betätigungsrichtung (x), unabhängig von dem Kompensationsmechanismus zu blockieren.

3. Betätigungsmechanismus nach Anspruch 1 oder 2, wobei
der Rückhaltemechanismus (2) dazu ausgebildet ist, das Übertragungselement (1) form- und/oder reibschlüssig zu blockieren.

4. Betätigungsmechanismus nach einem der vorangegangenen Ansprüche, wobei
der Rückhaltemechanismus (2) dazu ausgebildet ist, die Blockierung des Übertragungselementes (1) durch Aufbringen einer Betätigungskraft auf das Übertragungselement (1), deren Betrag einen vorbestimmten Wert übersteigt, und/oder durch Verschieben des Übertragungselements (1) parallel zur Betätigungsrichtung (x), insbesondere in Betätigungsrichtung (x), zu lösen.

5. Betätigungsmechanismus nach einem der vorangegangenen Ansprüche, wobei
der Rückhaltemechanismus (2) ein Rückhalteelement (3) und ein Gegenelement (5) aufweist, die dazu ausgebildet sind, miteinander in Kontakt zu treten, wodurch die Blockierung des Übertragungselementes (1) durch den Rückhaltemechanismus (2) erreicht wird.

6. Betätigungsmechanismus nach Anspruch 5, wobei
der Rückhaltemechanismus (2) dazu ausgebildet ist, dass zur Lösung der Blockierung der Kontakt zwischen dem Rückhalteelement (3) und dem Gegenelement (5) separat, vorzugsweise mittels einer Bewegung die nicht parallel zur Betätigungsrichtung (x) orientiert ist und insbesondere als Drehbewegung ausgebildet ist, gelöst werden muss.

7. Betätigungsmechanismus nach Anspruch 5 oder 6, wobei
der Rückhaltemechanismus (2) ein Vorspannelement (6) aufweist, das eine Vorspannkraft auf das Rückhalteelement (3) und/oder auf das Gegenelement (5) ausübt, um eine initiale Kontaktkraft zwischen dem Rückhalteelement (3) und dem Gegenelement (5) aufzubringen.

8. Betätigungsmechanismus nach einem der Ansprüche 5 bis 7, wobei
das Rückhalteelement (3) und/oder das Gegenelement (5) ein Kontaktelement (4) umfassen/umfasst, das zum Kontakt mit dem Gegenelement (5) und/oder dem Rückhalteelement (3) ausgebildet ist, und das vorzugsweise dazu ausgebildet ist, keine oder nur eine gegenüber der Betätigungskraft geringe Gegenkraft parallel zur Betätigungsrichtung (x) auf das Übertragungselement (1) auszuüben, wenn das Rückhalteelement (3) und das Gegenelement (5) nicht in Kontakt sind und das Übertragungselement (1) parallel zur Betätigungsrichtung (x) verschoben wird.

9. Betätigungsmechanismus nach einem der Ansprüche 5 bis 8, wobei
das Rückhalteelement (3) und/oder das Gegenelement (5) verschiebbar und/oder schwenkbar vorgesehen sind/ist, und/oder wobei
das Rückhalteelement (3) und/oder das Gegenelement (5) dazu ausgebildet sind/ist, insbesondere bei gegenseitigem Kontakt, sich, insbesondere elastisch, zu verformen.

10. Betätigungsmechanismus nach einem der Ansprüche 5 bis 9, wobei
das Rückhalteelement (3) oder das Gegenelement (5) auf dem Übertragungselement (1) ausgebildet ist.

11. Betätigungsmechanismus nach einem der Ansprüche 5 bis 10, wobei
der Kontakt zwischen Rückhalteelement (3) und Gegenelement (5), eine Rastierung, vorzugsweise eine Kugelrastierung, einen Bajonettverschluss, einen Rückhaltestift, einen Formfederring, und/oder eine Verschraubung umfasst.

12. Betätigungsmechanismus nach einem der Ansprüche 5 bis 11, wobei
die Blockierung durch den Rückhaltemechanismus (2) erst erfolgt, wenn das Übertragungselement (1) bei gleichzeitigem Kontakt zwischen Rückhalteelement (3) und Gegenelement (5) eine Wegstrecke parallel zu der Betätigungsrichtung (x) zurückgelegt hat.

13. Betätigungsmechanismus nach einem der vorangegangenen Ansprüche, wobei
der Betätigungsmechanismus dazu ausgebildet ist, dass die Betätigungskraft mechanisch, hydraulisch, pneumatisch, elektrisch, und/oder magnetisch auf den Betätigungsmechanismus aufgebracht werden kann.

14. Aktuator mit einem Betätigungsmechanismus nach einem der Ansprüche 1 bis 13, wobei das Übertragungselement (1) dazu ausgebildet ist, eine Verschiebung, die aus einem Aufbringen einer Betätigungskraft auf den Betätigungsmechanismus resultiert, auf ein zu betätigendes Element zu übertragen, wobei
das zu betätigende Element vorzugsweise eine Fahrzeugkupplung ist.

15. Fahrzeug, insbesondere ein Nutzfahrzeug, aufweisend einen Betätigungsmechanismus nach einem der Ansprüche 1 bis 13 und/oder einen Aktuator nach Anspruch 14.

## Claims

1. Actuating mechanism having:
- a transmission element (1), which is configured to be displaced by an actuating force, which is applied to the actuating mechanism, parallel to an actuating direction (x); and
- a restraining mechanism (2), which is configured to block a displacement of the transmission element (1) parallel to the actuating direction (x),
**characterized in that**
the restraining mechanism (2) is configured to block the transmission element (1) at a position along the actuating direction (x) which is outside a working stroke of the transmission element (1).

2. Actuating mechanism according to claim 1, having:
- a compensating mechanism, which is configured to establish a connection for transmitting the actuating force to the transmission element (1), when an actuating force is applied to the actuating mechanism, and which is configured to release the connection when no actuating force is applied to the actuating mechanism, wherein
the transmission element (1) is provided to be preferably movable relative to the compensating mechanism when the connection is released, and/or wherein
the restraining mechanism (2) is preferably configured to block the displacement of the transmission element (1) parallel to the actuating direction (x), independently of the compensating mechanism.

3. Actuating mechanism according to claim 1 or 2, wherein:
the restraining mechanism (2) is configured to block the transmission element (1) in a positive and/or non-positive manner.

4. Actuating mechanism according to any one of the preceding claims, wherein
the restraining mechanism (2) is configured to release the blocking of the transmission element (1) by applying an actuating force to the transmission element (1), the level of which exceeds a predetermined value, and/or by displacing the transmission element (1) parallel to the actuating direction (x), in particular in actuating direction (x).

5. Actuating mechanism according to any one of the preceding claims, wherein
the restraining mechanism (2) has a restraining element (3) and a counter element (5) which are configured to come into contact with one another, thereby achieving the blocking of the transmission element (1) by the restraining mechanism (2).

6. Actuating mechanism according to claim 5, wherein:
the restraining mechanism (2) is configured such that in order to release the blocking, the contact between the restraining element (3) and the counter element (5) has to be released separately, preferably by means of a movement which is not parallel to the actuating direction (x) and in particular is a rotational movement.

7. Actuating mechanism according to claim 5 or 6, wherein:
the restraining mechanism (2) has a prestressing element (6) which exerts a prestressing force on the restraining element (3) and/or on the counter element (5) in order to apply an initial contact force between the restraining element (3) and the counter element (5).

8. Actuating mechanism according to any one of claims 5 to 7, wherein
the restraining element (3) and/or the counter element (5) comprise(s) a contact element (4) which is configured to contact the counter element (5) and/or the restraining element (3), and which is preferably configured to exert no counter force, or only a small counter force compared to the actuating force, parallel to the actuating direction (x) on the transmission element (1), when the restraining element (3) and the counter element (5) are not in contact and the transmission element (1) is displaced parallel to the actuating direction (x).

9. Actuating mechanism according to any one of claims 5 to 8, wherein
the restraining element (3) and/or the counter element (5) is/are provided to be displaceable and/or pivotable, and/or wherein
the restraining element (3) and/or the counter element (5) is/are configured to be deformed, in particular elastically, on mutual contact.

10. Actuating mechanism according to any one of claims 5 to 9, wherein
the restraining element (3) or the counter element (5) is formed on the transmission element (1).

11. Actuating mechanism according to any one of claims 5 to 10, wherein
the contact between the restraining element (3) and the counter element (5) comprises a detent mechanism, preferably a ball detent mecahnism, a bayonet catch, a retaining pin, a shaped spring ring and/or a screw connection.

12. Actuating mechanism according to any one of claims 5 to 11, wherein
the blocking by the restraining mechanism (2) only takes place when the transmission element (1) has covered a distance parallel to the actuating direction (x) with simultaneous contact between the restraining element (3) and counter element (5).

13. Actuating mechanism according to any one of the preceding claims, wherein
the actuating mechanism is configured such that the actuating force can be applied to the actuating mechanism mechanically, hydraulically, pneumatically, electrically, and/or magnetically.

14. Actuator with an actuating mechanism according to any one of claims 1 to 13, wherein the transmission element (1) is configured to transmit a displacement resulting from an application of an actuating force to the actuating mechanism to an element to be actuated, wherein
the element to be actuated is preferably a vehicle clutch.

15. Vehicle, in particular a utility vehicle, having an actuating mechanism according to any one of claims 1 to 13 and/or an actuator according to claim 14.

## Revendications

1. Mécanisme d'actionnement présentant :
- un élément de transmission (1) qui est conçu pour être déplacé parallèlement à une direction d'actionnement (x) par une force d'actionnement qui est appliquée au mécanisme d'actionnement ; et
- un mécanisme de retenue (2) qui est conçu pour bloquer un déplacement de l'élément de transmission (1) parallèlement à la direction d'actionnement (x),
**caractérisé en ce que**
le mécanisme de retenue (2) est conçu pour bloquer l'élément de transmission (1) à une position le long de la direction d'actionnement (x) qui se situe à l'extérieur d'une course de travail de l'élément de transmission (1).

2. Mécanisme d'actionnement selon la revendication 1, présentant :
- un mécanisme de compensation, qui est conçu pour établir une connexion pour transmettre la force d'actionnement à l'élément de transmission (1) lorsqu'une force d'actionnement est appliquée au mécanisme d'actionnement, et qui est conçu pour libérer la connexion lorsqu'aucune force d'actionnement n'est appliquée au mécanisme d'actionnement, dans lequel
l'élément de transmission (1) est de préférence prévu pour un mouvement relatif par rapport au mécanisme de compensation lorsque la connexion est libérée, et/ou dans lequel
le mécanisme de retenue (2) est de préférence conçu pour bloquer le déplacement de l'élément de transmission (1) parallèlement à la direction d'actionnement (x), indépendamment du mécanisme de compensation.

3. Mécanisme d'actionnement selon la revendication 1 ou 2, dans lequel
le mécanisme de retenue (2) est conçu pour bloquer l'élément de transmission (1) par complémentarité de forme et/ou par friction.

4. Mécanisme d'actionnement selon l'une quelconque des revendications précédentes, dans lequel
le mécanisme de retenue (2) est conçu pour libérer le blocage de l'élément de transmission (1) en appliquant à l'élément de transmission (1) une force d'actionnement dont le montant dépasse une valeur prédéterminée et/ou en déplaçant l'élément de transmission (1) parallèlement à la direction d'actionnement (x), en particulier dans la direction d'actionnement (x).

5. Mécanisme d'actionnement selon l'une quelconque des revendications précédentes, dans lequel
le mécanisme de retenue (2) présente un élément de retenue (3) et un élément antagoniste (5) qui sont conçus pour entrer en contact l'un avec l'autre, moyennant quoi le blocage de l'élément de transmission (1) peut être atteint par le mécanisme de retenue (2).

6. Mécanisme d'actionnement selon la revendication 5, dans lequel
le mécanisme de retenue (2) est conçu de sorte que, pour libérer le blocage, le contact entre l'élément de retenue (3) et l'élément antagoniste (5) doit être libéré séparément, de préférence au moyen d'un mouvement qui n'est pas orienté parallèlement à la direction d'actionnement (x) et est en particulier conçu en tant que mouvement de rotation.

7. Mécanisme d'actionnement selon la revendication 5 ou 6, dans lequel
le mécanisme de retenue (2) présente un élément de précontrainte (6) qui exerce une force de précontrainte sur l'élément de retenue (3) et/ou sur l'élément antagoniste (5) pour appliquer une force de contact initiale entre l'élément de retenue (3) et l'élément antagoniste (5).

8. Mécanisme d'actionnement selon l'une quelconque des revendications 5 à 7, dans lequel
l'élément de retenue (3) et/ou l'élément antagoniste (5) comprennent/comprend un élément de contact (4) qui est conçu pour entrer en contact avec l'élément antagoniste (5) et/ou l'élément de retenue (3), et qui est conçu de préférence pour ne pas exercer de force antagoniste sur l'élément de transmission (1), ou pour exercer une force antagoniste parallèle à la direction d'actionnement (x) faible par rapport à la force d'actionnement, lorsque l'élément de retenue (3) et l'élément antagoniste (5) ne sont pas en contact et l'élément de transmission (1) est déplacé parallèlement à la direction d'actionnement (x).

9. Mécanisme d'actionnement selon l'une quelconque des revendications 5 à 8, dans lequel
l'élément de retenue (3) et/ou l'élément antagoniste (5) est/sont prévus pour être déplaçables et/ou pivotants, et/ou dans lequel
l'élément de retenue (3) et/ou l'élément antagoniste (5) est/sont configurés pour se déformer, en particulier lors d'un contact mutuel, en particulier élastiquement.

10. Mécanisme d'actionnement selon l'une quelconque des revendications 5 à 9, dans lequel
l'élément de retenue (3) ou l'élément antagoniste (5) est formé sur l'élément de transmission (1).

11. Mécanisme d'actionnement selon l'une quelconque des revendications 5 à 10, dans lequel
le contact entre l'élément de retenue (3) et l'élément antagoniste (5) comprend un crantage, de préférence un crantage à bille, une fermeture à baïonnette, une goupille de retenue, une bague élastique moulée et/ou un raccord à vis.

12. Mécanisme d'actionnement selon l'une quelconque des revendications 5 à 11, dans lequel
le blocage par le mécanisme de retenue (2) n'a lieu que lorsque l'élément de transmission (1) a parcouru une distance parallèle à la direction d'actionnement (x) lors d'un contact simultané entre l'élément de retenue (3) et l'élément antagoniste (5).

13. Mécanisme d'actionnement selon l'une quelconque des revendications précédentes, dans lequel
le mécanisme d'actionnement est conçu de sorte que la force d'actionnement peut être appliquée au mécanisme d'actionnement par voie mécanique, hydraulique, pneumatique, électrique et/ou magnétique.

14. Actionneur avec un mécanisme d'actionnement selon l'une quelconque des revendications 1 à 13, dans lequel l'élément de transmission (1) est conçu pour transmettre un déplacement qui résulte de l'application d'une force d'actionnement au mécanisme d'actionnement sur un élément à actionner, dans lequel
l'élément à actionner est de préférence un embrayage de véhicule.

15. Véhicule, en particulier un véhicule utilitaire, présentant un mécanisme d'actionnement selon l'une quelconque des revendications 1 à 13 et/ou un actionneur selon la revendication 14.
